# EUROPÄISCHE PATENTSCHRIFT

(11) **EP 4 502 371 B1**
(45) Veröffentlichungstag und Bekanntmachung des Hinweises auf die Patenterteilung: **28.01.2026**
(21) Anmeldenummer: 24190351.7
(22) Anmeldetag: 23.07.2024
(51) Int. Cl.: F03D 80/00, E04H 12/34, B23D 57/00, B28D 1/08, E04H 12/12

(54) **VERFAHREN ZUM RÜCKBAU EINES TURMS**
METHOD FOR DISMANTLING A TOWER
PROCÉDÉ DE RÉTROMONTAGE D'UNE TOUR

(30) Priorität: 04.08.2023 DE 102023120798
(43) Veröffentlichungstag der Anmeldung: 05.02.2025
(73) Patentinhaber: Hagedorn, Stefan, 59602 Rüthen (DE)
(72) Erfinder: HAGEDORN, Stefan, 59602 Rüthen (DE); HAGEDORN, Stefanie, 59602 Rüthen (DE)
(74) Vertreter: Specht, Peter

(56) Entgegenhaltungen:
- JP-A- 2009 101 542
- JP-A- 2023 057 983
- JP-B2- 7 105 433
- US-A1- 2020 071 949

## Beschreibung

Die vorliegende Erfindung betrifft ein Verfahren zum Rückbau eines Turms, insbesondere eines Turms eines Windrads. Die Erfindung betrifft des Weiteren eine Anordnung zur Durchführung eines solchen Verfahrens.

Zur Durchführung eines Rückbaus eines Turms, insbesondere eines Turms eines Windrads ist es beispielsweise aus der DE 102019119127 A1 bekannt, Keilausnehmungen in einen Abschnitt einer Außenwand eines solchen Turms einzubringen, die die Fallrichtung des Turms bestimmen und zur Auslösung des Kippens des Turms in der Außenwand des Turms Sprengladungen anzubringen.

Solche Sprengungen haben allerdings den Nachteil extrem lauter Explosionsgeräusche, was insbesondere im Falle von in Waldgebieten aufgestellten Windrädern dazu führt, dass Wildtiere verjagt oder sogar verletzt werden.

Bekannt ist auch, beispielsweise aus der DE 10 2016 113 224 B3, einzelne Turmsegmente thermisch zu trennen bzw. aufzuschmelzen und dann die einzelnen Turmsegmente nacheinander abzutragen, was mit einem sehr großen Zeit- und Kostenaufwand einhergeht. Weiterer Stand der Technik ist in JP 2009101542 A offenbart.

Aufgabe der vorliegenden Erfindung ist es, ein Verfahren zum Rückbau eines Turms bereitzustellen, das ohne den Einsatz von Sprengstoff und gleichzeitig schnell und kostengünstig durchführbar ist.

Die gestellte Aufgabe wird durch ein Verfahren zum Rückbau eines Turms mit den des Anspruchs 1 gelöst.

Die Aufgabe wird des Weiteren durch eine Anordnung zur Durchführung eines solchen Verfahrens mit den Merkmalen des Anspruchs 8 gelöst.

Das erfindungsgemäße Verfahren zum Rückbau eines Turms, insbesondere eines Turms eines Windrads, weist die folgenden Verfahrensschritte auf:
a) Einbringen einer eine Fallrichtung des Turms vorgebenden Keilausnehmung in einen Abschnitt einer Außenwand des Turms,
b) Aufstellen eines Antriebsaggregats einer Seilsäge nahe der Außenwand des Turms auf einer der Fallrichtung abgewandten Seite des Turms,
c) Aufstellen eines ersten Rollenbocks nahe der Außenwand des Turms in einem ersten Bereich seitlich der Keilausnehmung,
d) Aufstellen eines zweiten Rollenbocks nahe der Außenwand des Turms seitlich der Keilausnehmung in einem zweiten Bereich auf einer dem ersten Bereich abgewandten Seite des Turms,
e) Anordnen eines Sägeseils ausgehend von dem Antriebsaggregat zum ersten Rollenbock, von dort entlang des Turms weiter zum zweiten Rollenbock und von dort weiter zum Antriebsaggregat der Seilsäge,
f) Verbinden der Seilenden des Sägeseils zur Ausbildung eines Endlosseils,
g) Durchführung des Sägevorgangs, bei dem das Sägeseil in die Außenwand des Turms einschneidet, bis der Turm in Richtung der Keilausnehmung kippt, wobei in Verfahrensschritt e) das Sägeseil entlang einer der Keilausnehmung abgewandten Mantelaußenfläche der Außenwand des Turms geführt wird, so dass das Sägeseil beim Sägevorgang von dem Antriebsaggregat weg gegen die Mantelaußenfläche der Außenwand des Turms gedrückt wird.

Mit diesem erfindungsgemäßen Verfahren ist es ermöglicht, den Turm ohne Sprengung zur Seite zu kippen.

Vorteilhaft ist außerdem, dass durch das Einschneiden des Turms von der der Keilausnehmung gegenüberliegenden Seite des Turms ein Festklemmen des Sägeseils verhindert wird, im Gegensatz zum üblichen Anziehen des Sägeseils in Richtung des Antriebsaggregats, was im vorliegenden Anwendungsfall bedeuten würde, dass das Sägeseil in das spitze Ende der Keilausnehmung eingelegt würde, was jedoch dazu führen würde, dass aufgrund der Gewichtskraft des Turms zeitgleich mit dem Sägevorgang eine Abstützung des Turms weg von der Keilausnehmung erfolgen müsste, da ansonsten der oberhalb des Sägeseils befindliche Teil des Turms das Sägeseil einklemmen würde.

Vorteilhafte Ausführungsvarianten sind Gegenstand der Unteransprüche.

Gemäß einer vorteilhaften Ausführungsvariante erfolgt als weiterer Verfahrensschritt ein Verankern des Antriebsaggregats der Seilsäge auf der Seite des Turms gegenüber der Fallrichtung, wodurch das Antriebsaggregat zuverlässig an einer vorbestimmten Position gesichert gehalten ist.

Gemäß einer weiteren bevorzugten Ausführungsvariante erfolgt in einem weiteren Verfahrensschritt auch ein Verankern des ersten Rollenbocks und des zweiten Rollenbocks.

In einer weiteren bevorzugten Ausführungsvariante wird das Antriebsaggregat der Seilsäge und/oder die Rollenböcke auf einem vorhandenen Fundament des Turms verankert.

In einer alternativen Ausführungsvariante erfolgt das Verankern des Antriebsaggregats und/oder der Rollenböcke auf in gleicher Höhe des Fundaments des Turms platzierten Ankerbausteinen, beispielsweise in Gestalt von Betonbausteinen.

Gemäß einer weiteren bevorzugten Ausführungsvariante erfolgt in einem weiteren Verfahrensschritt ein Anhalten des Sägevorgangs nach einer vorbestimmten Einschnitttiefe und Einbringen von Haltekeilen in den beim Sägevorgang erzeugten Spalt in der Außenwand des Turms.

Dadurch ist eine zusätzliche Sicherung des Sägeseils bedingt durch einen Rücksturz des Turms entgegen der geplanten Fallrichtung gewährleistet.

In einem bevorzugten weiteren Verfahrensschritt erfolgt nach dem Fall des Turms in ein zuvor angelegtes Fallbett ein Zerkleinern des Turms.

Die erfindungsgemäße Anordnung zur Durchführung eines Verfahrens zum Rückbau eines Turms gemäß dem oben beschriebenen Verfahren weist eine Seilsäge mit einem Antriebsaggregat und einem Sägeseil auf sowie einen ersten Rollenbock und einen zweiten Rollenbock mit jeweils wenigstens einer Umlenkrolle.

Das Antriebsaggregat ist dabei auf einer Keilausnehmung in einen Abschnitt einer Außenwand des Turms abgewandten Seite des Turms positioniert.

Die Rollenböcke sind auf gegenüberliegenden Seiten des Turms seitlich der Keilausnehmung positioniert und das Sägeseil ist vor dem Start des Sägevorgangs derart geführt, dass es im Bereich zwischen den Rollenböcken an eine der Keilausnehmung abgewandten Mantelaußenfläche des Turms anliegt und durch Spannen des Sägeseils weg von dem Antriebsaggregat der Seilsäge in Richtung der Keilausnehmung an die Mantelaußenfläche des Turms gedrückt ist.

Nachfolgend werden bevorzugte Ausführungsbeispiele anhand der beiliegenden Zeichnungen näher erläutert. Es zeigen:
- Figur 1: eine schematische Seitenansicht auf einen unteren Teil eines Turms und eines Fundaments des Turms mit daran angelegter Seilsäge und eingebrachter Keilausnehmung und
- Figur 2: eine schematische Schnittansicht durch eine Schnittebene unmittelbar oberhalb des Sägeseils.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Seilsäge, des Turms, Sägeseils, Rollenbock, Umlenkrolle und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

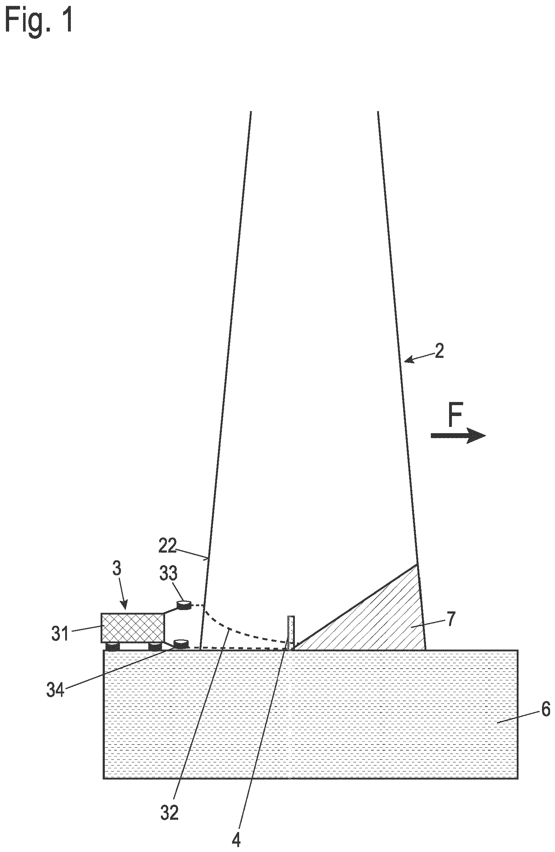

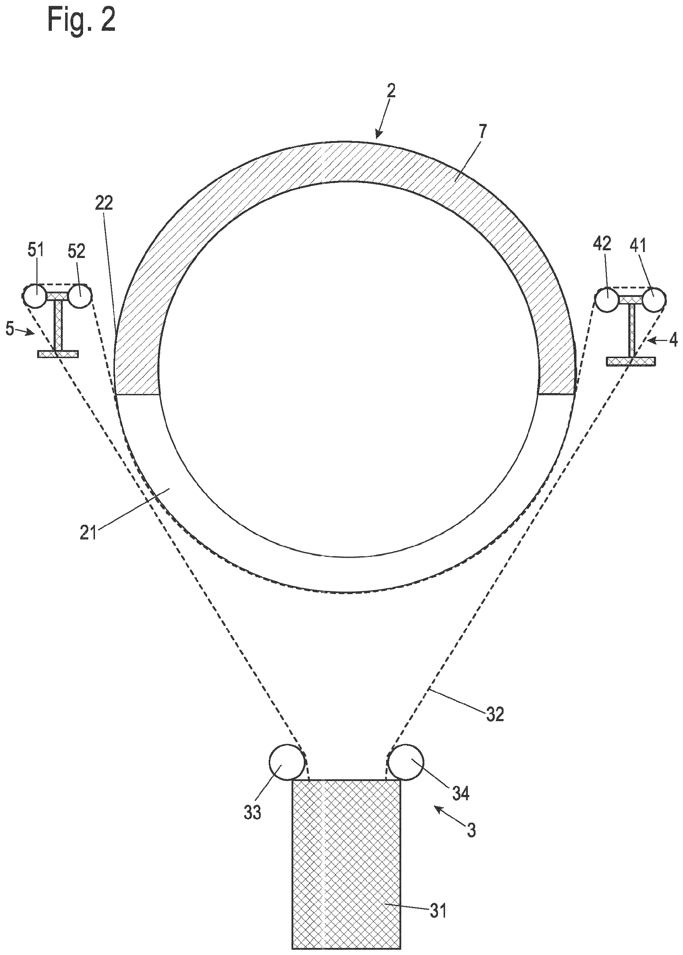

In den Figuren 1 und 2 ist mit dem Bezugszeichen 2 ein unterer Teil eines Turms, insbesondere eines Windrads bezeichnet.

Der Turm 2 ist dabei, wie in Figur 1 dargestellt ist, auf einem Fundament 6 angeordnet. Der Turm 2 ist üblicherweise aus Betonfertigteilen oder Ortbetonbauteilen gefertigt, üblicherweise aus einzelnen Ringelementen.

Zum Rückbau eines solchen Turms 2 wird, wie in den Figuren 1 und 2 dargestellt ist, zunächst eine Keilausnehmung 7 in einen Abschnitt einer Außenwand 21 des Turms 2 eingebracht.

Die Keilausnehmung 7 wird dabei beispielsweise in den Abschnitt der Außenwand 21 des Turms 2 durch Sägen oder Ausstemmen eingebracht.

Die Ausrichtung der Keilausnehmung 7 wird dabei durch die vorgesehene Fallrichtung F des Turms 2 vorgegeben.

In Fallrichtung F des Turms 2 wird bei Bedarf ein Fallbett für den Turm 2 vorbereitet.

Zur Absicherung der Fallrichtung F kann bei Bedarf in einem oberen Bereich des Turms 2 ein Anker mit einer Zugleine montiert werden (nicht gezeigt).

Nach dem Einbringen der Keilausnehmung 7 wird ein Antriebsaggregat 31 einer Seilsäge 3 nahe der Außenwand 21 des Turms 2 auf einer der Fallrichtung F abgewandten Seite des Turms 2 aufgestellt.

Anschließend erfolgt ein Aufstellen eines ersten Rollenbocks 4 nahe der Außenwand 21 des Turms 2 in einem ersten Bereich 8 seitlich der Keilausnehmung 7.

Danach oder auch zeitgleich wird ein zweiter Rollenbocks 5 nahe der Außenwand 21 des Turms 2 seitlich der Keilausnehmung 7 in einem zweiten Bereich auf einer dem ersten Bereich abgewandten Seite des Turms 2 aufgestellt.

Die beiden Rollenböcke 4, 5 sind dabei bevorzugt so ausgerichtet, dass sie senkrecht zur Fallrichtung F auf einer gedachten verlängerten Linie einer Spitze der Keilausnehmung 7 aufgestellt sind.

Denkbar ist auch, die Rollenböcke 4, 5 senkrecht zur Fallrichtung F etwas weiter in Richtung der Fallrichtung F zu platzieren, um sicherzustellen, dass ein Sägeseil 32 der Seilsäge 3 die Außenwand 21 des Turms 2 bis in den Bereich der Keilausnehmung 7 einschneiden könnte, falls dies notwendig ist.

Anschließend erfolgt ein Anordnen des Sägeseils 32, bei dem ein erstes Ende des Sägeseils 32 im Antriebsaggregat 31 fixiert ist und von dort ausgehend zum ersten Rollenbock 4 geführt ist, von dort entlang der Außenwand 21 des Turms 2 weiter zum zweiten Rollenbock 5 geführt wird und von dort weiter zurück zum Antriebsaggregat 31 der Seilsäge 3.

Diese Anordnung ist gut in Figur 2 zu erkennen.

Im Anschluss daran erfolgt ein Verbinden der beiden Seilenden des Sägeseils 32 zur Ausbildung eines Endlosseils. Die beiden Seilenden werden dabei im Bereich des Antriebsaggregats 31 vorzugsweise mit einem Seilschloss durch Pressen verbunden.

Danach startet die Durchführung des Sägevorgangs, bei dem das Sägeseil 32 in die Außenwand 21 des Turms 2 einschneidet, bis der Turm 2 in Richtung der Keilausnehmung 7 kippt.

Das Sägeseil 32 ist dabei entlang einer der Keilausnehmung 7 abgewandten Mantelaußenfläche 22 der Außenwand 21 des Turms 2 geführt, so dass das Sägeseil 32 beim Sägevorgang von dem Antriebsaggregat 31 weg gegen die Mantelaußenfläche 22 der Außenwand 21 des Turms 2 in Richtung der Keilausnehmung 7 gedrückt wird.

Um in jedem Fall ein Verklemmen des Sägeseils 32 während des Sägevorgangs zu verhindern, kann der Sägevorgang vorzugsweise mehrfach unterbrochen werden.

Nach dem Stoppen des Sägevorgangs nach Ansägen um einige Centimeter ist vorzugsweise vorgesehen, den Sägespalt nach der vorbestimmten Einschnitttiefe durch das Einbringen von Haltekeilen in den Spalt in der Außenwand 21 des Turms 2 zu sichern.

Weiter wird bevorzugt während des gesamten Sägevorgangs das Sägeseil 32 vorzugsweise mit Wasser zur Kühlung und Austragung von Materialschlamm, insbesondere Betonschlamm benetzt. Die Benetzung mit Wasser sorgt weiter für eine Unterbindung einer Staubentwicklung sowie eine Minimierung der Gefahr eines Seilrisses.

Das Sägeseil 32 ist bevorzugt als Diamantseil ausgebildet.

In einem weiteren bevorzugten Verfahrensschritt wird das Antriebsaggregat 31 der Seilsäge 3 auf der Seite des Turms 2 gegenüber der Fallrichtung F verankert, bevorzugt im vorhandenen Fundament 6 des Turms 2. Ebenso werden die beiden Rollenböcke 4, 5 bevorzugt im vorhandenen Fundament 6 des Turms 2 verankert.

Sofern das Fundament 6 nicht ausreichend Platz zur Verankerung bietet, wird als weiterer Verfahrensschritt wenigstens ein Verankerungsbaustein, beispielsweise in Gestalt eines Betonbausteins, neben dem Fundament 6 platziert, wobei die Oberseite des Ankerbausteins auf gleicher Höhe angeordnet ist wie die Oberseite des Fundaments 6, aus dem der Turm 2 nach oben vorsteht. Gleiches gilt auch für die Verankerung der Rollenböcke 4, 5, die bei mangelnder vorhandener Fläche des Fundaments 6 ebenfalls auf derartigen Ankerbausteinen verankert werden können.

Jeder der Rollenböcke 4, 5 weist wenigstens eine Umlenkrolle 41, 42, 51, 52 auf. Bei der in Figur 2 gezeigten Ausführungsvariante weist jeder der Rollenböcke 4, 5 zwei solcher Umlenkrollen 41, 42, 51, 52 auf.

Auch das Antriebsaggregat 31 weist bevorzugt am Seilaustritt wenigstens eine Antriebsrolle 33, 34 auf, durch die das Sägeseil 32 für den Sägevorgang angetrieben wird.

Nachdem der Turm 2 in sein Fallbett gefallen ist, wird dieser bevorzugt am Boden liegend zerkleinert, recycelt.

### Bezugszeichenliste

- 2: Turm
- 21: Außenwand
- 22: Mantelaußenfläche

- 3: Seilsäge
- 31: Antriebsaggregat
- 32: Sägeseil
- 33: Antriebsrolle
- 34: Antriebsrolle

- 4: erster Rollenbock
- 41: erste Umlenkrolle
- 42: zweite Umlenkrolle

- 5: zweiter Rollenbock
- 51: erste Umlenkrolle
- 52: zweite Umlenkrolle

- 6: Fundament

- 7: Keilausnehmung

- F: Fallrichtung

## Patentansprüche

1. Verfahren zum Rückbau eines Turms, insbesondere eines Turms eines Windrads, mit den Verfahrensschritten:
a) Einbringen einer eine Fallrichtung (F) des Turms (2) vorgebenden Keilausnehmung (7) in einen Abschnitt einer Außenwand (21) des Turms (2);
b) Aufstellen eines Antriebsaggregats (31) einer Seilsäge (3) nahe der Außenwand (21) des Turms (2) auf einer der Fallrichtung (F) abgewandten Seite des Turms (2);
c) Aufstellen eines ersten Rollenbocks (4) nahe der Außenwand (21) des Turms (2) in einem ersten Bereich seitlich der Keilausnehmung (7);
d) Aufstellen eines zweiten Rollenbocks (5) nahe der Außenwand (21) des Turms (2) seitlich der Keilausnehmung (7) in einem zweiten Bereich auf einer dem ersten Bereich abgewandten Seite des Turms (2);
e) Anordnen eines Sägeseils (32) ausgehend von dem Antriebsaggregat (31) zum ersten Rollenbock (4), von dort entlang des Turms (2) weiter zum zweiten Rollenbock (5) und von dort weiter zum Antriebsaggregat (31) der Seilsäge (3);
f) Verbinden der Seilenden des Sägeseils (32) zur Ausbildung eines Endlosseils;
g) Durchführung des Sägevorgangs, bei dem das Sägeseil (32) in die Außenwand (21) des Turms (2) einschneidet, bis der Turm (2) in Richtung der Keilausnehmung (7) kippt;
wobei in Verfahrensschritt e) das Sägeseil (32) entlang einer der Keilausnehmung (7) abgewandten Mantelaußenfläche (22) der Außenwand (21) des Turms (2) geführt wird, so dass das Sägeseil (32) beim Sägevorgang von dem Antriebsaggregat (31) weg gegen die Mantelaußenfläche (22) der Außenwand (21) des Turms (2) gedrückt wird.

2. Verfahren nach Anspruch 1, mit dem weiteren Verfahrensschritt:
h) Verankern des Antriebsaggregats (31) der Seilsäge (3) auf der Seite des Turms (2) gegenüber der Fallrichtung (F).

3. Verfahren nach Anspruch 1 oder 2, mit dem weiteren Verfahrensschritt:
i) Verankern des ersten Rollenbocks (4) und des zweiten Rollenbocks (5).

4. Verfahren nach einem der vorstehenden Ansprüche, wobei das Antriebsaggregat (31) der Seilsäge (3) und/oder die Rollenböcke (4, 5) auf einem vorhandenen Fundament (6) des Turms (2) verankert werden.

5. Verfahren nach einem der vorstehenden Ansprüche 1 bis 3, wobei das Antriebsaggregat (31) der Seilsäge (3) und/oder die Rollenböcke (4, 5) auf einem separat platzierten Ankerbaustein verankert werden.

6. Verfahren nach einem der vorstehenden Ansprüche, mit dem weiteren Verfahrensschritt:
j) Anhalten des Sägevorgangs (5) nach einer vorbestimmten Einschnitttiefe und Einbringen von Haltekeilen in den beim Sägevorgang erzeugten Spalt in der Außenwand (21) des Turms (2).

7. Verfahren nach einem der vorstehenden Ansprüche, mit dem weiteren Verfahrensschritt:
k) Zerkleinern des in ein zuvor angelegtes Fallbett gekippten Turms (2).

8. Anordnung (1) zur Durchführung eines Verfahrens zum Rückbau eines Turms (2) gemäß einem der vorstehenden Ansprüche, aufweisend
- eine Seilsäge (3) mit einem Antriebsaggregat (31) und einem Sägeseil (32),
- einen ersten Rollenbock (4) und einen zweiten Rollenbock (5) mit jeweils wenigstens einer Umlenkrolle (41, 42, 51, 52), wobei
- das Antriebsaggregat (31) auf einer einer Keilausnehmung (7) in einen Abschnitt einer Außenwand (21) des Turms (2) abgewandten Seite des Turms (2) positioniert ist,
- die Rollenböcke (4, 5) auf gegenüberliegenden Seiten des Turms (2) seitlich der Keilausnehmung (7) positioniert sind und
- das Sägeseil (32) vor dem Start des Sägevorgangs derart geführt ist, dass es im Bereich zwischen den Rollenböcken (4, 5) an eine der Keilausnehmung (7) abgewandten Mantelaußenfläche (22) des Turms (2) anliegt und durch Spannen des Sägeseils (32) weg von dem Antriebsaggregat (31) der Seilsäge (3) in Richtung der Keilausnehmung (7) an die Mantelaußenfläche (22) des Turms (2) gedrückt ist.

## Claims

1. Method for dismantling a tower, in particular a wind turbine tower, comprising the method steps:
a) making a wedge-shaped recess (7) in a section of an outer wall (21) of the tower (2), which recess specifies a direction of fall (F) for the tower (2);
b) setting up a drive unit (31) of a cable saw (3) near the outer wall (21) of the tower (2) on a side of the tower (2) facing away from the direction of fall (F);
c) setting up a first roller block (4) near the outer wall (21) of the tower (2) in a first region to the side of the wedge-shaped recess (7);
d) setting up a second roller block (5) near the outer wall (21) of the tower (2) to the side of the wedge-shaped recess (7) in a second region on a side of the tower (2) facing away from the first region;
e) arranging a sawing cable (32) starting from the drive unit (31) to the first roller block (4), from there along the tower (2) to the second roller block (5) and from there to the drive unit (31) of the cable saw (3);
f) connecting the ends of the sawing cable (32) to form an endless cable;
g) carrying out the sawing process, in which the sawing cable (32) cuts into the outer wall (21) of the tower (2) until the tower (2) tilts in the direction of the wedge-shaped recess (7);
wherein, in method step e), the sawing cable (32) is guided along an outer jacket surface (22) of the outer wall (21) of the tower (2) facing away from the wedge-shaped recess (7), so that during the sawing process the sawing cable (32) is pressed away from the drive unit (31) against the outer jacket surface (22) of the outer wall (21) of the tower (2).

2. Method according to claim 1, having the additional method step of:
h) anchoring the drive unit (31) of the cable saw (3) on the side of the tower (2) opposite the direction of fall (F).

3. Method according to claim 1 or 2, having the additional method step of:
i) anchoring the first roller block (4) and the second roller block (5).

4. Method according to one of the preceding claims, wherein the drive unit (31) of the cable saw (3) and/or the roller blocks (4, 5) are anchored on an existing foundation (6) of the tower (2).

5. Method according to one of the preceding claims 1 to 3, wherein the drive unit (31) of the cable saw (3) and/or the roller blocks (4, 5) are anchored on a separately placed anchor block.

6. Method according to one of the preceding claims, having the further method step of:
j) stopping the sawing process (5) after a predetermined cutting depth and inserting retaining wedges into the gap created in the outer wall (21) of the tower (2) during the sawing process.

7. Method according to one of the preceding claims, having the further method step of:
k) crushing the tower (2) tipped into a previously created fall bed.

8. Arrangement (1) for carrying out a method for dismantling a tower (2) according to one of the preceding claims, comprising
- a cable saw (3) with a drive unit (31) and a sawing cable (32),
- a first roller block (4) and a second roller block (5), each with at least one deflection roller (41, 42, 51, 52),
wherein
- the drive unit (31) is positioned on a side of the tower (2) facing away from a wedge-shaped recess (7) in a section of an outer wall (21) of the tower (2),
- the roller blocks (4, 5) are positioned on opposite sides of the tower (2) to the side of the wedge-shaped recess (7), and
- before the sawing process begins, the sawing cable (32) is guided in such a way that it rests against the outer jacket surface (22) of the tower (2) facing away from the wedge-shaped recess (7) in the region between the roller blocks (4, 5) and is pressed against the outer jacket surface (22) of the tower (2) by tensioning the sawing cable (32) away from the drive unit (31) of the cable saw (3) in the direction of the wedge-shaped recess (7).

## Revendications

1. Procédé de démantèlement d'une tour, en particulier d'une tour d'éolienne, comprenant les étapes suivantes :
a) création d'une découpe en coin (7) déterminant le sens de chute (F) de la tour (2) dans une partie d'une paroi extérieure (21) de la tour (2) ;
b) mise en place d'un groupe d'entraînement (31) d'une scie à câble (3) près de la paroi extérieure (21) de la tour (2), sur un côté de la tour (2) opposé au sens de chute (F) ;
c) mise en place d'un premier chevalet à rouleaux (4) près de la paroi extérieure (21) de la tour (2), dans une première zone située latéralement par rapport à la découpe en coin (7) ;
d) mise en place d'un deuxième chevalet à rouleaux (5) près de la paroi extérieure (21) de la tour (2) latéralement par rapport à la découpe en coin (7), dans une deuxième zone située sur un côté de la tour (2) opposé à la première zone ;
e) disposition d'un câble de sciage (32) à partir du groupe d'entraînement (31) jusqu'au premier chevalet à rouleaux (4), puis le long de la tour (2) jusqu'au deuxième chevalet à rouleaux (5) et de celui-ci au groupe d'entraînement (31) de la scie à câble (3) ;
f) liaison des extrémités du câble de sciage (32) pour former un câble sans fin ;
g) exécution de l'opération de sciage, pendant laquelle le câble de sciage (32) entaille la paroi extérieure (21) de la tour (2) jusqu'à ce que la tour (2) bascule vers la découpe en coin (7) ;
dans lequel, dans l'étape e) du procédé, le câble de sciage (32) est passé le long d'une surface extérieure d'enveloppe (22) de la paroi extérieure (21) de la tour (2) tournée à l'opposé de la découpe en coin (7) de sorte que, pendant l'opération de sciage, le câble de sciage (32) est éloigné du groupe d'entraînement (31) et pressé contre la surface extérieure d'enveloppe (22) de la paroi extérieure (21) de la tour (2).

2. Procédé selon la revendication 1, comprenant l'étape supplémentaire suivante :
h) ancrage du groupe d'entraînement (31) de la scie à câble (3) sur le côté de la tour (2) vis-à-vis du sens de chute (F).

3. Procédé selon la revendication 1 ou 2, comprenant l'étape supplémentaire suivante :
i) ancrage du premier chevalet à rouleaux (4) et du deuxième chevalet à rouleaux (5).

4. Procédé selon l'une des revendications précédentes, dans lequel le groupe d'entraînement (31) de la scie à câble (3) et/ou les chevalets à rouleaux (4, 5) sont ancrés sur une fondation (6) existante de la tour (2).

5. Procédé selon l'une des revendications 1 à 3, dans lequel le groupe d'entraînement (31) de la scie à câble (3) et/ou les chevalets à rouleaux (4, 5) sont ancrés sur un composant d'ancrage mis en place séparément.

6. Procédé selon l'une des revendications précédentes, comprenant l'étape supplémentaire suivante :
j) arrêt de l'opération de sciage (5) après une profondeur d'entaille prédéterminée et insertion de coins de maintien dans la fente créée par l'opération de sciage dans la paroi extérieure (21) de la tour (2).

7. Procédé selon l'une des revendications précédentes, comprenant l'étape supplémentaire suivante :
k) fragmentation de la tour (2) basculée dans un lit de chute créé au préalable.

8. Dispositif (1) pour l'exécution d'un procédé de démantèlement d'une tour (2) selon l'une des revendications précédentes, comprenant
- une scie à câble (3) avec un groupe d'entraînement (31) et un câble de sciage (32),
- un premier chevalet à rouleaux (4) et un deuxième chevalet à rouleaux (5) comportant chacun au moins un rouleau de renvoi (41, 42, 51, 52),
dans lequel
- le groupe d'entraînement (31) est positionné sur un côté de la tour (2) opposé à la découpe en coin (7) dans une section d'une paroi extérieure (21) de la tour (2) ;
- les chevalets à rouleaux (4, 5) sont positionnés latéralement par rapport à la découpe en coin (7) sur des côtés opposés de la tour (2) et
- le câble de sciage (32) est guidé, avant le début de l'opération de sciage, de telle façon qu'il repose dans la zone comprise entre les chevalets à rouleaux (4, 5) sur une surface extérieure d'enveloppe (22) de la tour (2) tournée à l'opposé de la découpe en coin (7) et soit éloigné du groupe d'entraînement (31) de la scie à câble (3) par la mise en tension du câble de sciage (32) et pressé vers la découpe en coin (7) sur la surface extérieure d'enveloppe (22) de la tour (2).
